# EUROPÄISCHE PATENTSCHRIFT

(11) **EP 3 309 698 B1**
(45) Veröffentlichungstag und Bekanntmachung des Hinweises auf die Patenterteilung: **04.09.2019**
(21) Anmeldenummer: 17192870.8
(22) Anmeldetag: 25.09.2017
(51) Int. Cl.: G06F 21/12, G06F 21/44, G06F 21/73

(54) **VERFAHREN ZUM BETREIBEN EINES COMPUTERSYSTEMS**
METHOD FOR OPERATING A COMPUTER SYSTEM
PROCÉDÉ DE FONCTIONNEMENT D'UN SYSTÈME INFORMATIQUE

(30) Priorität: 14.10.2016 DE 102016119658; 13.09.2017 DE 102017121167
(43) Veröffentlichungstag der Anmeldung: 18.04.2018
(73) Patentinhaber: dSPACE digital signal processing and control engineering GmbH, 33102 Paderborn (DE)
(72) Erfinder: Schmitz, Elmar, 33142 Büren (DE); Schwarte, Albert, 33098 Paderborn (DE); Schäfergockel, Guido, 33106 Paderborn (DE); Brehm, Thorsten, 33102 Paderborn (DE)

(56) Entgegenhaltungen:
- US-A- 5 103 476
- US-A1- 2010 293 080
- US-A1- 2010 324 983
- US-A1- 2014 165 053

## Beschreibung

Die Erfindung betrifft ein Verfahren zum Betreiben eines Prozessrechners bzw. eines Computersystems aus einem Prozessrechner und einem zumindest zeitweise mit diesem verbundenen Bedienrechner, einen Bedienrechner und ein Computerprogrammprodukt.

Technische Maßnahmen, um die Ausführung eines Softwareprogramms an das Vorhandensein einer entsprechenden Lizenz zu binden, sind weit verbreitet. Beispielsweise ist aus der EP 0623073 B1 ein Rechnersystem aus einem Rechner und einer lösbar mit diesem gekoppelten Sicherheitsvorrichtung bekannt, bei dem ein im Rechner laufender Lizenzmanager überprüft, ob Anwendungsprogramme lizenziert sind, und ein Ausführen nur dann erlaubt, wenn dies bejaht wird. Für die Prüfung verwendet der Lizenz-Manager eine im Speicher des Rechners gespeicherte Lizenz-Tabelle. Die Sicherheitsvorrichtung enthält eine Identität, welche periodisch von dem Lizenz-Manager abgefragt wird. Wenn die gemeldete Identität nicht mit einem erwarteten Identitätswert übereinstimmt, der im Lizenz-Manager gespeichert ist, so wird die Genehmigung für das Ausführen der Anwendungsprogramme zurückgezogen.

Es sind auch Verfahren zum Binden eines Softwareprogramms an einen bestimmten Rechner bekannt, wie dies beispielsweise bei der Aktivierung eines Windows-Betriebssystems erfolgt. Derartige Softwareprogramme werden als ausführbarer Binärcode an Kunden vertrieben.

Auch bei dem Vertrieb physikalischer Medien kann es vorgesehen sein, dass ein für das Abspielen verwendeter Rechner an das Medium gebunden wird, indem ein eindeutiges Kennzeichen des Rechners von einer auf dem Rechner installierten Lizenzierungsanwendung ermittelt und an einen Lizenzserver übertragen wird. Beispielsweise ist aus der US 2010/0324983 A1 ein System und ein Verfahren zum Vertrieb von Medien bekannt, bei dem nicht nur ein Binden von Medium und Rechner erfolgt, sondern auch der Kauf einer Lizenz über den Server abgewickelt wird.

In der US 2014/0165053 A1 ist ein Lizenzverwaltungssystem offenbart, welches ein Austauschnetzwerk aus einer Vielzahl von Peer-to-Peer Netzwerk-Servern umfasst, von denen jeder dazu eingerichtet ist, ausführbaren Programmcode zu speichern, wobei zu dem Programmcode eine Datei mit Lizenzinformationen erzeugt und gespeichert wird, wobei ein Download und eine Installation des ausführbaren Programmcodes gemäß der in den Lizenzinformationen gespeicherten Lizenzbedingungen erfolgt.

Für die Entwicklung von Prozessrechnern, die beispielsweise als Steuergeräte in einem Automobil eingesetzt werden, kommen in zunehmendem Maße eine modellbasierte Code-Entwicklung und/oder eine modellbasierte Simulation des beeinflussten Systems zum Einsatz. Hierfür werden häufig spezielle Prozessrechner wie Hardware-in-the-Loop-Simulatorsysteme oder Rapid-Control-Prototyping-Plattformen eingesetzt. Diese werden bevorzugt mit Hilfe von graphischen Modellen programmiert, welche als Grundlage für die Erzeugung von ausführbarem Binärcode dienen. Bei dem Entwurf von Modellen werden häufig kommerzielle Bibliotheken verwendet, die Bausteine für das Gesamtsystem bereitstellen. Da die Erstellung einer Bibliothek meist ein beträchtliches Vorwissen erfordert und einen hohen Aufwand mit sich bringt, sind auch die Bibliotheken kostspielig und schützenswert.

Vor diesem Hintergrund besteht die Aufgabe der Erfindung darin, ein Verfahren und eine Vorrichtung anzugeben, welche eine sichere Lizenzüberprüfung für die beim Erstellen eines ausführbaren Binärcodes verwendeten Bibliotheken ermöglichen.

Diese Aufgabe wird durch ein Verfahren zum Betreiben eines Prozessrechners mit den Merkmalen von Anspruch 1 und einen Bedienrechner mit den Merkmalen von Anspruch 9 gelöst. Vorteilhafte Ausgestaltungen der Erfindung sind Gegenstand von abhängigen Unteransprüchen.

Erfindungsgemäß wird also ein Verfahren zum Betreiben eines Prozessrechners bereitgestellt, insbesondere eines Echtzeit-Prozessrechners, wobei der Prozessrechner zumindest zeitweise mit einem Bedienrechner verbunden ist, der ein Konfigurationsprogramm ausführt, das ausführbaren Binärcode auf den Prozessrechner übertragen kann. Dem Binärcode sind Lizenzinformationen zugeordnet, die benötigte Lizenzen angeben. Die Lizenzinformationen bzw. die benötigten Lizenzen werden zumindest teilweise nach Maßgabe der für das Erstellen des ausführbaren Binärcodes verwendeten Bibliotheken oder Bausteine bestimmt, spiegeln diese insbesondere wider, und sind unabhängig von einem Kennzeichen eines Rechners. Der Prozessrechner weist mindestens ein eindeutiges Kennzeichen auf, wie insbesondere eine Seriennummer eines Prozessors, und das Konfigurationsprogramm ist dazu eingerichtet, ein eindeutiges Kennzeichen des Prozessrechners zu empfangen. Das Konfigurationsprogramm führt einem ebenfalls auf dem Bedienrechner ausgeführten Authorisierungsprogramm das eindeutige Kennzeichen des Prozessrechners sowie die dem Binärcode zugeordneten Lizenzinformationen zu. In einem gesicherten Datencontainer des Bedienrechners ist eine Zuordnungsliste aus einem oder mehreren eindeutigen Kennzeichen eines Prozessrechners und jeweils einer oder mehreren zugeordneten verfügbaren Lizenzen hinterlegt. Zweckmäßigerweise kann das Authorisierungsprogramm auf die Zuordnungsliste zugreifen oder einzelne Zuordnungen zwischen einem eindeutigen Kennzeichen und einer verfügbaren Lizenz abfragen oder empfangen. Zur Feststellung einer Zulässigkeit überprüft das Authorisierungsprogramm, ob die dem eindeutigen Kennzeichen des aktuell angeschlossenen Prozessrechners zugeordneten verfügbaren Lizenzen die gemäß Lizenzinformationen benötigten Lizenzen abdecken, und das Konfigurationsprogramm überträgt den ausführbaren Binärcode nur dann auf den Prozessrechner, wenn das Authorisierungsprogramm die Zulässigkeit festgestellt hat.

Mit Prozessrechner sind vorzugsweise in erster Linie Echtzeit-Hardware-Plattformen gemeint, die dafür eingerichtet sind, Eingangsgrößen wie Sensorsignale zu empfangen und Ausgangsgrößen wie Ansteuersignale für Aktoren zu erzeugen, wobei zwischen einer Änderung einer Eingangsgröße und der entsprechenden Änderung einer Ausgangsgröße eine vorgegebene maximale Latenz von vorzugsweise 100 ms, besonders bevorzugt 10 ms, insbesondere 1 ms, nicht überschritten wird. Das erfindungsgemäße Verfahren ist aber auch auf einem beliebigen Embedded System anwendbar, solange dieses eine Schnittstelle für die Anbindung eines Bedienrechners aufweist. Hierbei kann es sich auch um eine Funkschnittstelle handeln. Bei einem Echtzeit-Prozessrechner ist das erfindungsgemäße Verfahren besonders vorteilhaft, da das Auftreten einer durch eine Lizenzüberprüfung bedingten erhöhten Latenz sicher vermieden wird.

Dass die Lizenzinformationen bzw. die benötigten Lizenzen zumindest teilweise nach Maßgabe der für das Erstellen des ausführbaren Binärcodes verwendeten Bibliotheken oder Bausteine bestimmt werden, soll vorzugsweise heißen, dass für eine oder mehrere Bibliotheken vorgegeben wird, dass die Ausführung des Binärcodes nur dann erfolgen darf, wenn eine Lizenz für die jeweilige Bibliothek auf dem aktuell verwendeten Prozessrechner vorhanden bzw. dessen eindeutigem Kennzeichen zugeordnet ist. Wenn die Lizenzinformationen die verwendeten Bibliotheken widerspiegeln, ist damit vorzugsweise gemeint, dass jeder verwendeten Bibliothek aus einer Liste von überwachten Bibliotheken eine benötigte Lizenz zugeordnet ist.

Zweckmäßigerweise umfassen die Lizenzinformationen neben der Art der benötigten Lizenzen auch eine Angabe der Anzahl jeweils benötigter Lizenzen, wobei mehr als eine Lizenz einer bestimmten Art benötigt werden kann.

Es kann auch vorgesehen sein, die Lizenz für eine Bibliothek in verschiedenen Versionen anzubieten, wobei insbesondere eine Lizenz mit einer höheren Versionsnummer auch die Verwendung von ausführbarem Binärcode gestattet, der mit einer Bibliothek einer vorherigen Version erstellt wurde. Somit kann bestehender Binärcode ungehindert weiterverwendet werden. Ferner kann auch vorgesehen sein, Lizenzen ein Datum zuzuordnen, wobei mittels dieser Lizenz dann zweckmäßigerweise ausführbarer Binärcode übertragen werden kann, der vor dem zugeordneten Datum erstellt wurde.

Die verfügbaren Lizenzen sind zweckmäßigerweise dauerhaft einem eindeutigen Kennzeichen des Prozessrechners zugeordnet. Das eindeutige Kennzeichen kann insbesondere eine Seriennummer eines Prozessors des Prozessrechners sein. Auch eine Seriennummer einer Hardware-Schnittstelle kann als eindeutiges Kennzeichen verwendet werden, solange sie elektronisch ausgelesen, aber nicht manipuliert werden kann. Das eindeutige Kennzeichen eines Prozessrechners kann auch anhand einer Kombination verschiedener Merkmale definiert sein. Aufgrund der festen Zuordnung verfügbarer Lizenzen zu einem eindeutig identifizierten Prozessrechner ist es für die Zuverlässigkeit des Verfahrens auch unerheblich, wenn der übertragene Binärcode auf einem nichtflüchtigen Speicher des Prozessrechners hinterlegt wird. Wenn die Verfügbarkeit einer Lizenz überprüft wurde, ist es nicht erforderlich, den Prozessrechner mit weiteren Lizenzüberprüfungen zu belasten. Der Prozessrechner kann beliebig oft aus dem ausgeschalteten Zustand booten, auch wenn keine Verbindung zum Bedienrechner besteht.

Der Binärcode kann sequentieller Programmcode sein, mehrere Threads umfassen oder auch zumindest teilweise als eine FPGA-Konfiguration realisiert sein, wenn der Prozessrechner einen oder mehrere programmierbare Logikbausteine (FPGA) aufweist. Für die Verwendung des erfindungsgemäßen Verfahrens ist es nur erforderlich, dass bei dem Erstellen des Binärcodes Informationen über die verwendeten Bibliotheken ermittelt und geeignet abgelegt werden, insbesondere in der den Binärcode enthaltenden Datei. Hierbei ist es prinzipiell unerheblich, ob der ausführbare Binärcode auf dem Bedienrechner erstellt wurde oder ein extern erzeugter Binärcode von dem Bedienrechner auf den Prozessrechner übertragen wird.

Vorteilhafterweise stellt das erfindungsgemäße Verfahren sicher, dass nur solcher ausführbarer Binärcode ausgeführt wird, der unter Verwendung lizenzierter Bibliotheken erstellt wurde. Dies verhindert Szenarien, in denen auf einem einzigen Rechner mit einer einzigen gültigen Lizenz für eine Bibliothek ausführbarer Binärcode erstellt wird, der dann auf einer Vielzahl von Prozessrechnern ohne gültige Lizenz für die Bibliothek ausgeführt werden kann. Mit anderen Worten ermöglicht es das erfindungsgemäße Verfahren, einen Lizenzmissbrauch bzw. eine Übernutzung von Lizenzen zuverlässig zu verhindern. Einmal erstellter Binärcode kann prinzipiell auf verschiedenen Prozessrechnern ausgeführt werden, da in dem ausführbaren Binärcode selbst nur der Lizenzbedarf hinterlegt wird, und das Vorhandensein einer entsprechenden Lizenz durch das Authorisierungsprogramm anhand der auf den Bedienrechner vorhandenen Informationen über verfügbare Lizenzen sichergestellt bzw. überprüft wird. Das einer verfügbaren Lizenz zugeordnete Kennzeichen kann direkt mit dem Kennzeichen des angeschlossenen Prozessrechners verglichen werden.

Prozessrechner werden häufig in sicherheitsrelevanten Bereichen eingesetzt, man könnte also von kritischen Prozessrechnern sprechen. Ein Beispiel für einen kritischen Prozessrechner ist ein Steuergerät, welches eine Fahrdynamikregelung an einem Fahrzeug durchführt, so dass eine Fehlfunktion hohe Sachschäden oder gar Personenschäden verursachen könnte. Da bei dem erfindungsgemäßen Verfahren die Lizenzüberprüfung bei bzw. vor der Übertragung des ausführbaren Binärcodes erfolgt, ist sichergestellt, dass ein einmal gestarteter Prozessrechner die gewünschte Funktion auch dauerhaft bereitstellen kann, ohne die Ausführung aufgrund einer ggfs. auch nur vermeintlich fehlenden Lizenz plötzlich zu beenden. Der Prozessrechner führt einmal zulässig übertragenen Binärcode zuverlässig aus, wobei die dauerhafte Bindung der verfügbaren Lizenz an das eindeutige Kennzeichen des Prozessrechners auch ohne weitere Lizenzprüfung einen Missbrauch verhindert. Vorteilhafterweise ist das erfindungsgemäße Verfahren also auch sicher mit kritischen Prozessrechnern verwendbar, denn die Lizenzüberprüfung kann keinen Ausfall des Prozessrechners während des Betriebs verursachen.

Weiterhin ist das erfindungsgemäße Verfahren effizient bzw. kostengünstig, da auf dem Prozessrechner selbst weder zusätzliche Hardware noch ein spezielles Softwaremodul - wie ein Runtime Environment - erforderlich ist. Daher tritt auch keine Belastung des Prozessors des Prozessrechners auf, und das erfindungsgemäße Verfahren kann mit beliebigen Embedded Systems eingesetzt werden.

Gemäß einer bevorzugten Ausführungsform der Erfindung liest das Authorisierungsprogramm die einem eindeutigen Kennzeichen zugeordneten verfügbaren Lizenzen aus einem Hardware-Dongle aus oder empfängt sie von diesem. Ein Hardware-Dongle kann recht einfach manipulationssicher gestaltet werden und ist weiterhin problemlos zu transferieren, wenn beispielsweise der Bedienrechner gewechselt werden soll. Prinzipiell kann ein gesicherter Datencontainer aber auch in den Bedienrechner integriert werden, sei als gesonderte Hardwarekomponente oder als geeignetes Softwareprogramm. Es könnte auch vorgesehen sein, den gesicherten Datencontainer in das Authorisierungsprogramm zu integrieren, beispielsweise durch das Hinzufügen von Softwaremodulen zum Schreiben und Lesen von verschlüsselten Dateien. Die Zuordnung von verfügbarer Lizenz zu eindeutigem Kennzeichen ist zweckmäßigerweise in dem gesicherten Datencontainer dauerhaft gespeichert.

Bei dem Verkauf eines Prozessrechners kann eine Anzahl von Lizenzen mitgeliefert werden, indem dem eindeutigen Kennzeichen des Prozessrechners entsprechend viele Lizenzen eines entsprechenden Typs zugeordnet werden. Die verfügbaren Lizenzen können insbesondere vertrieben werden, indem dem Prozessrechner ein separater gesicherter Datencontainer beigefügt wird, also ein Hardware-Dongle, der mit einem Bedienrechner verbunden werden kann. Entsprechend kann es auch vorgesehen sein, dass eine Lizenz für eine Bibliothek vertrieben wird, wobei diese an einen oder mehrere Prozessrechner gebunden ist. In einer Ausführungsform kann eine geeignet gesicherte Übertragung der verfügbaren Lizenzen von einem Lizenzserver auf einen oder mehrere Bedienrechner erfolgen. Auch wenn die verfügbaren Lizenzen auf mehreren Bedienrechnern hinterlegt sind, kann kein Missbrauch erfolgen, da diese demselben eindeutigen Kennzeichen eines Prozessrechners zugeordnet sind. Für das erfindungsgemäße Verfahren zum Betrieb eines Prozessrechners ist keine Internetverbindung erforderlich, da die verfügbaren Lizenzen auf einem gesicherten Datencontainer des Bedienrechners hinterlegt sind.

Vorzugsweise sind der Binärcode und die zugeordneten Lizenzinformationen in einer Datei enthalten, wobei die Lizenzinformationen verschlüsselt sind und vorzugsweise einen Hash-Wert des zugeordneten Binärcodes umfassen. Dies ermöglicht es, Lizenzinformationen zuverlässig an den zugeordneten Binärcode zu binden und somit Manipulationen zu verhindern. Der ausführbare Binärcode kann nach wie vor auf beliebigen Prozessrechnern ausgeführt werden, sobald diesen bzw. deren eindeutigem Kennzeichen eine entsprechende Anzahl von verfügbaren Lizenzen zugeordnet ist. Weiterhin ist auch die Handhabung einfach, da für einen Transfer nur eine einzige Datei übertragen werden muss. Prinzipiell kann das Konfigurationsprogramm die Lizenzinformationen dem Authorisierungsprogramm dadurch zuführen, dass die gesamte Datei umfassend den Binärcode übergeben wird.

Für Prozessrechner, die mehrere Prozessoren aufweisen, ist in einer vorteilhaften Ausgestaltung vorgesehen, dass der Binärcode dann auf einem oder mehreren der Prozessoren ausgeführt werden kann, wenn alle für einen beliebigen Prozessor des Prozessrechners verfügbaren Lizenzen in Summe den Lizenzbedarf abdecken. Der Begriff mehrere Prozessoren soll hierbei auch den Fall mehrerer Prozessorkerne umfassen, die jeweils eine individuelle Seriennummer als Kennzeichen haben. Mit Lizenzbedarf ist hierbei die Gesamtheit aller benötigten Lizenzen gemeint. Vorteilhafterweise können also verfügbare Lizenzen zwischen den einzelnen Prozessorkernen eines Mehrkernsystems geteilt werden, wenn diese physikalisch miteinander verbunden bzw. in einem Prozessrechner angeordnet sind.

Gemäß einer bevorzugten Ausführungsform wird der Binärcode, welcher auf einem Prozessrechner ausgeführt werden kann, durch Kompilieren und Linken eines Quellcodes erzeugt, und die Lizenzinformationen werden zumindest teilweise anhand der verlinkten Bibliotheken erzeugt. Durch geeignetes Einrichten der Toolchain ist dies für den Benutzer mit keinem Aufwand verbunden, sondern die benötigten Informationen, wie beispielsweise Name und Version einer verwendeten Bibliothek können automatisch beim Build-Prozess ermittelt und in dem Binärcode hinterlegt werden. Dadurch, dass die Lizenzinformationen beim Linken erzeugt werden, ist bei beliebigen vom Nutzer erstellten Programmen sichergestellt, dass die benötigten Lizenzen die verwendeten lizenzpflichtigen Bibliotheken genau widerspiegeln. Der Hersteller einer Bibliothek liefert also nicht eine vorgegebene Lizenz, die fest an einen ausführbaren Binärcode gebunden ist, sondern ein Werkzeug für die Ermittlung des konkreten Lizenzbedarfs. Somit kann das Vorliegen einer Lizenz für verwendete statisch oder dynamisch gelinkte Bibliotheken überprüft werden.

Gemäß einer besonders bevorzugten Ausführungsform der Erfindung wird der Binärcode, welcher auf einem Prozessrechner ausgeführt werden kann, zumindest teilweise anhand eines graphischen Modells erzeugt, das einen oder mehrere Bausteine umfasst, und die Lizenzinformationen werden zumindest teilweise anhand der für das graphische Modell verwendeten Bausteine erzeugt. Ein graphisches Modell kann beispielsweise ein Blockdiagramm sein, welches das zeitliche Verhalten und/oder innere Zustände eines dynamischen Systems beschreibt. Das Blockdiagramm kann als Bausteine verschiedene Blöcke enthalten, welche auch als Teil einer Blockbibliothek einzeln verkauft werden können. Die Bausteine können eine innere Struktur umfassen, bei der ein hierarchisch übergeordneter Block in einem untergeordneten Subsystem durch mehrere untergeordnete Blöcke implementiert wird. Eine interne Implementierung in Form von einem oder mehreren Subsystemen ermöglicht es beispielsweise, ein Modell eines Fahrzeugs als einfach bedienbaren Baustein anzubieten. Wenn die Lizenzinformationen sowohl Art als auch Anzahl jeweils benötigter Lizenzen angeben, können diese insbesondere nach Maßgabe von Art und Anzahl verwendeter Bausteine erzeugt werden. Es kann auch vorgesehen sein, verschiedene Bausteine in einer Blockbibliothek zusammenzufassen und insbesondere bezüglich der benötigten Lizenzen als eine Art Baustein anzusehen.

Zweckmäßigerweise ist der Bedienrechner mit einem Server verbunden, der eine Liste verfügbarer Lizenzen ohne zugeordnetes eindeutiges Kennzeichen wie z.B. eine Seriennummer verwaltet. Bei Bedarf kann der Bedienrechner eine oder mehrere der verfügbaren Lizenzen aus der Liste entnehmen, wobei die entnommenen Lizenzen mit einem eindeutigen Kennzeichen eines Prozessrechners verknüpft werden, und wobei das eindeutige Kennzeichen eines mit dem Bedienrechner verbundenen Prozessrechners nach erfolgter Verknüpfung vom Authorisierungsprogramm zur Überprüfung der Zulässigkeit herangezogen wird. In einer größeren Arbeitsgruppe mit mehreren Bedienrechnern und Prozessrechnern können somit verfügbare Lizenzen flexibler behandelt werden. Indem der Server gesichert wird und die Kommunikation zwischen den Rechnern verschlüsselt wird, bleibt das Verfahren zuverlässig vor Manipulationen geschützt.

Besonders zweckmäßig ist es, wenn die entnommenen Lizenzen sowie das verknüpfte eindeutige Kennzeichen in einem gesicherten Datencontainer auf dem Bedienrechner gespeichert werden, wobei der Bedienrechner eine entnommene Lizenz erst dann wieder aus dem gesicherten Datencontainer entfernt und an den Server zurückgibt, wenn der Binärcode von dem Prozessrechner gelöscht wurde oder mit einem anderen Binärcode überschrieben wurde, welcher die entsprechende Lizenz nicht benötigt. Dies stellt eine zuverlässige Funktion auch bei zeitweise unterbrochener Netzwerkverbindung zwischen Bedienrechner und Server sicher.

Ferner betrifft die Erfindung einen Bedienrechner zum Konfigurieren eines Prozessrechners, umfassend einen Prozessor, eine Schnittstelle und einen verschlüsselten Datencontainer, wobei der Prozessor dazu eingerichtet ist, ein erfindungsgemäßes Verfahren auszuführen.

Die Erfindung betrifft weiterhin ein Computerprogrammprodukt mit einem computerlesbaren Speichermedium, auf dem Befehle eingebettet sind, die, wenn sie von einer Recheneinheit ausgeführt werden, bewirken, dass die Recheneinheit dazu eingerichtet ist, ein erfindungsgemäßes Verfahren auszuführen.

Die Erfindung wird nachfolgend unter Bezugnahme auf die Zeichnungen näher erläutert. Hierbei werden gleichartige Teile mit identischen Bezeichnungen beschriftet. Die dargestellten Ausführungsformen sind stark schematisiert, d.h. die Abstände und die lateralen und die vertikalen Abmessungen sind nicht maßstäblich und weisen, sofern nicht anders angegeben, auch keine ableitbaren geometrischen Relationen zueinander auf.

Darin zeigt:
- Figur 1: eine bevorzugte Ausführungsform eines Bedienrechners,
- Figur 2: eine schematische Darstellung der vorzugsweise auf einem Bedienrechner vorhandenen Softwarekomponenten,
- Figur 3: eine bevorzugte Ausführungsform eines Prozessrechners,
- Figur 4: eine schematische Darstellung eines erfindungsgemäßen Verfahrens,
- Figur 5: eine schematische Darstellung eines Verfahrens zum Einbinden von Lizenzinformationen,
- Figur 6: eine schematische Darstellung eines Bedienrechners, der mit zwei Prozessrechnern verbunden ist, und
- Figur 7: eine schematische Darstellung eines Servers, der mit zwei Bedienrechnern verbunden ist.

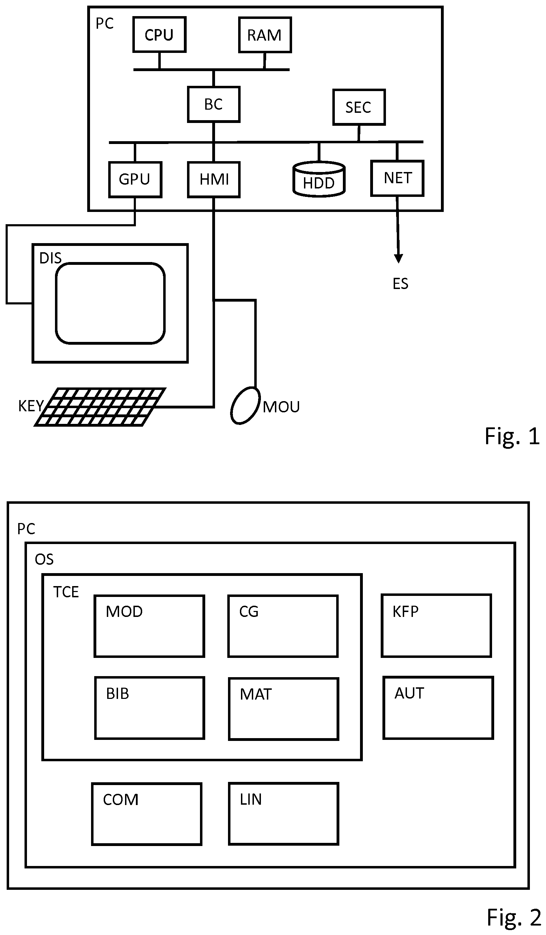

Figur 1 zeigt eine bevorzugte Ausführungsform eines Bedienrechners PC. Dieser weist einen Prozessor CPU, der insbesondere als Mehrkernprozessor realisiert sein kann, einen Arbeitsspeicher RAM und einen Buscontroller BC auf. Bevorzugt ist der Bedienrechner PC dazu ausgelegt, von einem Nutzer direkt manuell bedient zu werden, wobei über eine Grafikkarte GPU ein Monitor DIS und über eine Peripherieschnittstelle HMI eine Tastatur KEY und eine Maus MOU angeschlossen sind. Prinzipiell könnte der Bedienrechner PC auch ein Touch-Interface aufweisen. Der Bedienrechner umfasst weiterhin einen nichtflüchtigen Datenspeicher HDD, der insbesondere als Festplatte und/oder Solid State Disk ausgeführt sein kann, sowie eine Schnittstelle NET, insbesondere eine Netzwerkschnittstelle. Über die Schnittstelle NET können ein oder mehrere Prozessrechner ES angeschlossen werden. Prinzipiell können ein oder mehrere beliebige Schnittstellen, insbesondere drahtgebundene Schnittstellen, an dem Bedienrechner PC vorhanden und jeweils für die Verbindung mit einem oder mehreren Prozessrechnern ES einsetzbar sein. Zweckmäßigerweise kann eine Netzwerkschnittstelle nach dem Ethernet-Standard verwendet werden, wobei zumindest die physikalische Schicht standardkonform ausgeführt ist; eine oder mehrere höhere Protokollschichten können auch proprietär bzw. an den Prozessrechner angepasst implementiert sein. Die Schnittstelle NET kann auch drahtlos ausgeführt sein, wie insbesondere als WLAN-Schnittstelle oder nach einem Standard wie Bluetooth. Hierbei kann es sich auch um eine Mobilfunkverbindung wie LTE handeln, wobei vorzugsweise die ausgetauschten Daten verschlüsselt sind. Es ist vorteilhaft, wenn zumindest eine Schnittstelle des Bedienrechners als Standard-Ethernet-Schnittstelle ausgeführt ist, so dass weitere Bedienrechner und/oder Server einfach mit dem Bedienrechner PC verbunden werden können.

Ferner weist der Bedienrechner PC einen gesicherten Datencontainer SEC auf. Dieser kann beispielsweise in Form eines Dongles realisiert sein, der insbesondere mit einer Peripherieschnittstelle verbunden ist. Alternativ kann es auch vorgesehen sein, einen gesicherten Datencontainer SEC als Bauteil fest in dem Bedienrechner zu integrieren oder in Form einer Datei auf dem nichtflüchtigen Datenspeicher HDD zu hinterlegen, wobei der Inhalt zweckmäßigerweise durch Mechanismen des Betriebssystems und/oder ein geeignetes Verwaltungsprogramm vor unbefugten Zugriffen bzw. Manipulationen geschützt wird.

In Figur 2 ist ein Schema der vorzugsweise auf einem Bedienrechner PC installierten Softwarekomponenten dargestellt. Diese verwenden Mechanismen des Betriebssystems OS, um beispielsweise auf den nichtflüchtigen Speicher HDD zuzugreifen oder über die Netzwerkschnittstelle NET eine Verbindung zu einem externen Rechner aufzubauen.

Eine Technische Rechenumgebung TCE ermöglicht die Erstellung von Modellen und die Erzeugung von Simulationscode aus den Modellen. In einer Modellierumgebung MOD können vorzugsweise über eine graphische Benutzerschnittstelle Modelle eines graphischen Systems erstellt werden. Hierbei kann es sich insbesondere um Blockdiagramme handeln, welche mehrere Blöcke umfassen, die über Signale miteinander verbunden sind und das zeitliche Verhalten und/oder interne Zustände eines dynamischen Systems beschreiben. Die Blockdiagramme können vorzugsweise hierarchisch sein, wobei eine Vielzahl von Blöcken in einer untergeordneten Ebene den Aufbau eines Blocks in einer übergeordneten Ebene beschreibt. Die Rechenumgebung TCE umfasst eine oder mehrere Bibliotheken BIB, aus der Blöcke bzw. Bausteine für den Aufbau eines Modells ausgewählt werden können. In einer Skriptumgebung MAT können Anweisungen interaktiv oder über eine Batchdatei eingegeben werden, um Berechnungen durchzuführen oder das Modell zu modifizieren. Aus einem erstellten Modell kann mit Hilfe eines Codegenerators CG ein Simulationscode, insbesondere ein Programmcode in einer Programmiersprache wie C erzeugt werden.

Der Bedienrechner PC weist einen Compiler COM und einen Linker LIN auf, die zweckmäßigerweise für die Erzeugung von auf einem Prozessrechner ES ausführbaren Binärdateien eingerichtet sind. Prinzipiell kann eine Vielzahl von Compilern vorhanden sein, insbesondere Cross-Compiler für unterschiedliche Zielplattformen, um Prozessrechner ES mit unterschiedlichen Prozessorarchitekturen zu unterstützen.

Weiterhin sind auf dem Bedienrechner ein Konfigurationsprogramm KFP und ein Authorisierungsprogramm AUTH installiert. Das Konfigurationsprogramm KFP ist dazu eingerichtet, über die Schnittstelle NET mit einem oder mehreren Prozessrechnern ES zu kommunizieren, so dass ausführbarer Binärcode auf einen Prozessrechner ES übertragen, eine Ausführung des Binärcodes gestartet oder gestoppt, und Daten zwischen Prozessrechner ES und Bedienrechner PC ausgetauscht werden kann bzw. können. Das Authorisierungsprogramm AUT ist dazu eingerichtet, Lizenzinformationen zu empfangen, also Angaben über für die Ausführung eines Binärcodes benötigten Lizenzen, und aus einem gesicherten Datencontainer SEC Informationen über verfügbare Lizenzen auszulesen bzw. von diesem zu empfangen. Wenn ein ausführbarer Binärcode auf einen Prozessrechner ESx (x = 1, 2, 3, ...) mit einem eindeutigen Kennzeichen übertragen werden soll, so vergleicht das Authorisierungsprogramm AUT die für den ausführbaren Binärcode benötigten Lizenzen mit den für den Prozessrechner ESx verfügbaren Lizenzen, die also dem eindeutigen Kennzeichen von ESx zugeordnet sind.

Konfigurationsprogramm und Authorisierungsprogramm können als getrennte Softwarekomponenten realisiert sein oder in einer ausführbaren Datei integriert sein. Es kann vorgesehen sein, dass sich Konfigurationsprogramm KFP und Authorisierungsprogramm AUT zunächst gegenüber der jeweils anderen Softwarekomponente authentifizieren, beispielsweise mittels eines Challenge-Response-Verfahrens. Weiterhin kann insbesondere das Authorisierungsprogramm nur in einer verschlüsselten Form auf dem nichtflüchtigen Speicher hinterlegt sein, um Manipulationen zu verhindern. Ferner kann vorgesehen sein, dass der Prozessrechner dazu eingerichtet ist, nur solchen ausführbaren Binärcode zu empfangen und/oder auszuführen, der von einem authentifizierten Konfigurationsprogramm und/oder einem authentifizierten Bedienrechner übertragen wurde. Zu diesem Zweck kann die Initialisierung des Prozessrechners ein Challenge-Response-Verfahren zwischen Konfigurationsprogramm bzw. Bedienrechner und Prozessrechner umfassen. Konfigurationsprogramm und/oder Authorisierungsprogramm können ferner mit an sich bekannten Mechanismen gegen Manipulationen durch dritte geschützt sein.

Die Erfindung ist auch anwendbar, wenn Programmcode bzw. Quelltext durch einen Programmierer von Hand erstellt wird und lediglich Bibliotheken eingebunden werden. In diesem Fall ist eine Technische Rechenumgebung TCE auf dem Bedienrechner PC nicht erforderlich.

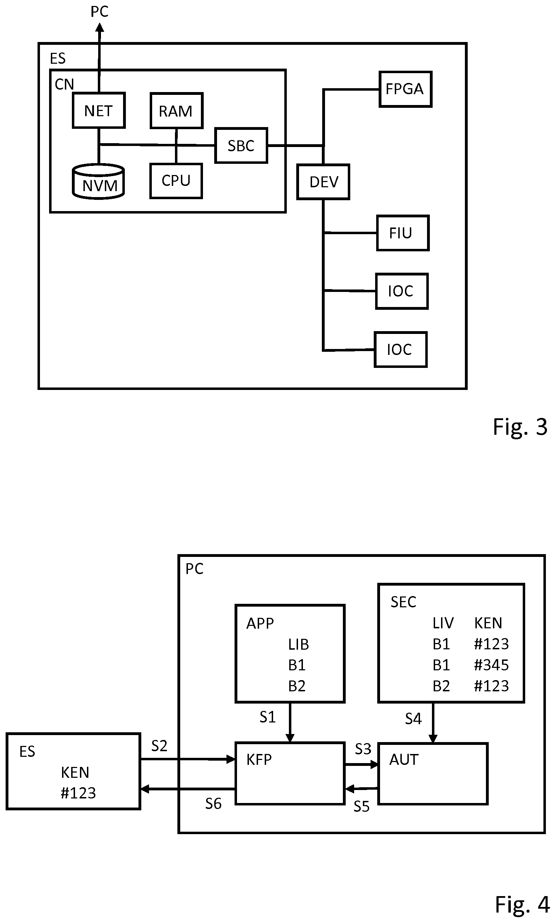

Figur 3 zeigt eine bevorzugte Ausführungsform eines Prozessrechners ES. Dieser umfasst einen Rechenknoten CN, der über eine Netzwerkschnittstelle NET mit einem Bedienrechner PC verbunden ist. Prinzipiell muss die Verbindung nur während einer Anpassung der Konfiguration des Prozessrechners ES bestehen, vorzugsweise besteht sie dauerhaft. Der Rechenknoten CN weist mindestens einen Prozessor CPU, insbesondere einen Mehrkernprozessor, oder mehrere Prozessoren, einen Arbeitsspeicher RAM und einen nichtflüchtigen Speicher NVM auf, auf dem vorzugsweise ein Betriebssystem und/oder ein Bootloader hinterlegt sind. Über einen Hochgeschwindigkeitsbus SBC bzw. einen entsprechenden Controller sind zweckmäßigerweise ein Logikboard FPGA und eine Geräteschnittstelle DEV mit dem Rechenknoten verbunden. Das Logikboard FPGA umfasst einen programmierbaren Logikbaustein, der speziell konfiguriert werden kann, um insbesondere eine latenzfreie Ansteuerung eines Elektromotors zu ermöglichen. Über die Geräteschnittstelle DEV können eine Vielzahl von Modulen angeschlossen werden, wie eine Fehlersimulationsschaltung FIU, die angeschlossene Geräte mit definierten elektrischen Fehlern beaufschlagt, oder Schnittstellenkarten IOC, die einen oder mehrere analoge oder digitale I/O-Kanäle bereitstellen. Zweckmäßigerweise werden für die Fehlersimulationsschaltung FIU und/oder die Schnittstellenkarten Bibliotheken bereitgestellt, um diese einfach in einem vom Nutzer erstellten Modell ansteuern zu können. Es kann auch vorgesehen sein, Treiber für das Ansteuern der Module anzubieten und die Verwendung eines Hardware-Moduls nur bei Vorhandensein einer Lizenz zu gestatten. Hierbei kann es vorgesehen sein, dass ein Treiber mit einer einzigen Lizenz verknüpft ist, oder dass eine Verwendung mehrerer Hardware-Module oder mehrerer Kanäle eines Hardware-Moduls das Vorhandensein einer entsprechende Anzahl verfügbarer Lizenzen voraussetzt.

Wenn der Prozessor CPU des Prozessrechners ES als ein Mehrkernprozessor realisiert ist, so kann jedem einzelnen Kern ein eindeutiges Kennzeichen zugeordnet werden; im Sinne der Erfindung ist ein Mehrkernprozessor somit äquivalent zu mehreren Prozessoren. Auch andere Komponenten, wie insbesondere das Logikboard FPGA mit einem oder mehreren programmierbaren Logikbausteinen können ein eindeutiges Kennzeichen aufweisen. Für die Verwendung als eindeutiges Kennzeichen sind insbesondere solche Eigenschaften elektronischer Bausteine geeignet, die einfach elektronisch ausgelesen werden können, aber nur schwierig oder vorzugsweise überhaupt nicht geändert werden können, und die eine hinreichende Individualität aufweisen. Prinzipiell kann ein eindeutiges Kennzeichen eines Prozessrechners ES auch anhand der Eigenschaften mehrerer elektronischer Bausteine definiert werden, insbesondere die Seriennummern aller verbauten Prozessoren oder Prozessorkerne und/oder aller verbauten programmierbaren Logikbausteine und/oder einer oder mehrerer verbauter Schnittstellen- oder Sensorbausteine.

Der gezeigte Prozessrechner ES ist ein komplexes und ausbaufähiges System; prinzipiell ist die Erfindung auch auf eingebettete Systeme mit minimalen Hardwareressourcen anwendbar, solange diese zumindest zeitweise mit einem Bedienrechner PC verbunden sind bzw. zur Konfiguration mit diesem verbunden werden können.

In Figur 4 ist der Ablauf eines erfindungsgemäßen Verfahrens schematisch dargestellt, wobei sowohl beteiligte Softwarekomponenten als auch der Bedienrechner PC und der Prozessrechner ES angedeutet sind.

Das Konfigurationsprogramm KFP lädt in Schritt S1 den ausführbaren Binärcode APP, beispielsweise aus dem nichtflüchtigen Datenspeicher HDD. Der ausführbare Binärcode enthält Lizenzinformationen über die verwendeten Bibliotheken, insbesondere eine Liste der benötigten Lizenzen LIB. Im gezeigten Beispiel werden Lizenzen für zwei Bibliotheken B1 und B2 benötigt.

In Schritt S2 empfängt das Konfigurationsprogramm KFP eine eindeutige Kennung KEN von dem Prozessrechner ES. Im gezeigten Beispiel hat der Prozessrechner ES die Kennung #123. Hierbei kann es sich insbesondere um die Seriennummer eines Prozessors CPU des Prozessrechners ES handeln.

Die Lizenzinformationen zu den benötigten Lizenzen LIB und die eindeutige Kennung KEN werden in Schritt S3 einem Authorisierungsprogramm AUT zugeführt. Das Authorisierungsprogramm AUT kann beispielsweise als eigenständiges Programm oder als Unterfunktion des Konfigurationsprogramms KFP realisiert sein; die Informationen können insbesondere über Mechanismen zur Interprozesskommunikation oder als Argumente eines Funktionsaufrufs zugeführt werden. Es kann auch vorgesehen sein, den ausführbaren Binärcode APP vollständig zu übergeben.

In Schritt S4 empfängt das Authorisierungsprogramm AUT Informationen über verfügbare Lizenzen LIV von dem gesicherten Datencontainer SEC. Im gezeigten Beispiel sind je eine Lizenz für Bibliothek B1 der Kennung #123 und der Kennung #345 zugeordnet; weiterhin ist der Kennung #123 eine Lizenz für die Bibliothek B2 zugeordnet.

Das Authorisierungsprogramm vergleicht die Lizenzinformationen über benötigte Lizenzen LIB mit den Informationen über verfügbare Lizenzen LIV, die der angegebenen Kennung des verbundenen Prozessrechners zugeordnet sind. Im vorliegenden Beispiel benötigt der ausführbare Binärcode APP je eine Lizenz für die Bibliotheken B1 und B2. Da der Kennung #123 des Prozessrechners ES jeweils eine verfügbare Lizenz für die Bibliotheken B1 und B2 zugeordnet ist, decken die verfügbaren Lizenzen LIV die benötigten Lizenzen LIB ab. Das Authorisierungsprogramm stellt also die Zulässigkeit fest und teilt dies in Schritt S5 dem Konfigurationsprogramm KFP mit.

In Schritt S6 überträgt das Konfigurationsprogramm KFP daraufhin den ausführbaren Binärcode APP auf den Prozessrechner ES. Zusätzlich kann es diesen auch noch gemäß der Vorgaben des Nutzers konfigurieren, um beispielsweise I/O-Kanäle entsprechend einzustellen. Der Prozessrechner ES ist nun einsetzbar, um einen physikalischen Prozess zu regeln oder zu simulieren.

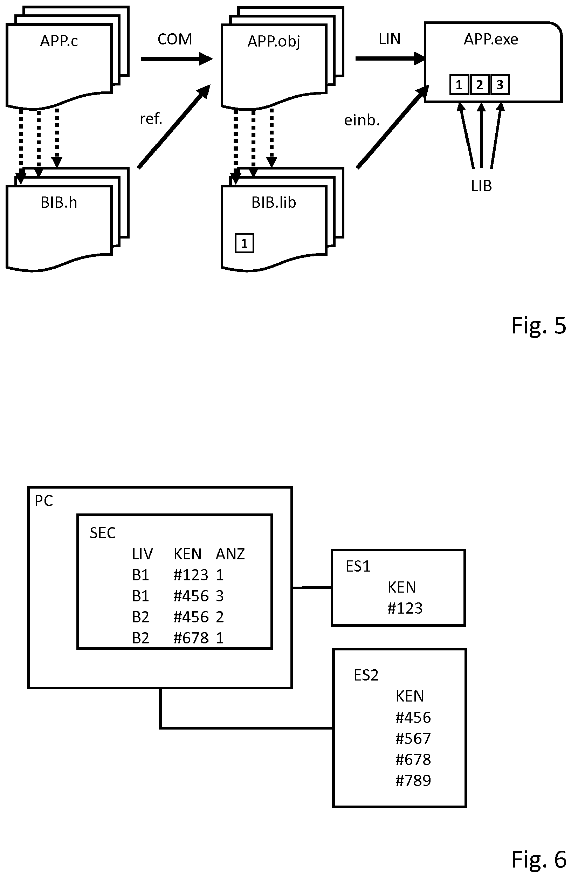

Figur 5 zeigt eine schematische Darstellung eines beispielgemäßen Verfahrens, mit dem Lizenzinformationen in eine ausführbare Binärdatei integriert werden können.

Der anhand eines Modells generierte oder von Hand erzeugte Quellcode APP.c benötigt eine oder mehrere Bibliotheken, was durch gestrichelte Pfeile angedeutet ist. Wird der Quellcode APP.c vom Compiler COM kompiliert, so wird dabei z.B. auch die referenzierte (ref.) Header-Datei BIB.h einer Bibliothek eingebunden. Die vom Compiler erzeugte Binärdatei APP.obj ist alleine noch nicht lauffähig, sondern enthält Verweise auf die Binärdateien für die verwendeten Bibliotheken. Neben dem ausführbaren Code enthält z.B. die Binärdatei BIB.lib auch noch die der verwendeten Bibliothek zugeordneten Lizenzinformationen. Insbesondere kann es sich dabei um einen mit einem privaten Schlüssel erzeugten Lizenzstring handeln, der von dem Authorisierungsprogramm mit einem öffentlich verfügbaren Schlüssel ausgelesen werden kann. Mittels des Linkers LIN wird z.B. die Binärdatei BIB.lib für die verwendete Bibliothek eingebunden (einb.), um den auf dem Prozessrechner ausführbaren Binärcode zu erzeugen. Zweckmäßigerweise wird einer Bibliothek jeweils ein individueller Lizenzstring zugewiesen. Wenn der Quellcode mehrere Bibliotheken verwendet, so werden jeweils die entsprechenden Binärdateien für die Bibliotheken eingebunden. Da diese jeweils den individuellen Lizenzstring der Bibliothek enthalten, können dem ausführbaren Binärcode vollständige Lizenzinformationen entnommen werden. In dem gezeigten Beispiel sind benötigte Lizenzen LIB durch nummerierte Quadrate (1, 2, 3) angedeutet.

Es kann auch vorgesehen sein, im Rahmen des Buildprozesses einen Hash der vom Compiler erzeugten Binärdatei APP.obj zu berechnen und in der Datei mit dem vollständigen ausführbaren Binärcode zu speichern. Das Authorisierungsprogramm kann dazu eingerichtet sein, die vollständige Datei mit ausführbarem Binärcode und Lizenzinformationen zu empfangen, einen Hash zu berechnen und ein Übertragen des ausführbaren Binärcodes nur dann zu gestatten, wenn der gespeicherte Hash-Wert mit dem neuberechneten übereinstimmt.

In Figur 6 ist schematisch ein Bedienrechner PC dargestellt, der mit zwei Prozessrechnern ES1, ES2 verbunden ist.

Der gesicherte Datencontainer SEC des Bedienrechners PC enthält eine Liste verfügbarer Lizenzen LIV, die jeweils einem eindeutigen Kennzeichen KEN zugeordnet sind. Prinzipiell können einem eindeutigen Kennzeichen eine beliebige Anzahl ANZ verfügbarer Lizenzen LIV für eine bestimmte Bibliothek zugeordnet werden. In dem gezeigten Beispiel ist der eindeutigen Kennung #123 eine Lizenz LIB für die Bibliothek B1 zugeordnet. Der Kennung #456 sind 3 verfügbare Lizenzen für die Bibliothek B1 und 2 verfügbare Lizenzen für die Bibliothek B2 zugeordnet, während der Kennung #678 eine verfügbare Lizenz für die Bibliothek B2 zugeordnet ist.

Der Prozessrechner ES1 weist das eindeutige Kennzeichnen #123 auf. Somit kann ein ausführbarer Binärcode, der unter Verwendung der Bibliothek B1 erstellt wurde, auf dem Prozessrechner ES1 ausgeführt werden. Hingegen kann ein ausführbarer Binärcode, welcher die Bibliothek B2 verwendet, mangels verfügbarer Lizenz LIV nicht auf den Prozessrechner ES1 übertragen bzw. ausgeführt werden.

In dem gezeigten Beispiel weist Prozessrechner ES2 die eindeutigen Kennzeichen #456, #567, #678 und #789 auf, beispielsweise weil ES2 einen Vierkernprozessor umfasst, dessen einzelne Kerne die jeweiligen Seriennummern aufweisen. Wenn nun ausführbarer Binärcode auf ES2 übertragen werden soll, so kann der Vergleich zwischen benötigten Lizenzen LIB und verfügbaren Lizenzen LIV derart erfolgen, dass es für die Zulässigkeit hinreichend ist, wenn die den einzelnen eindeutigen Kennzeichen zugeordneten Lizenzen, also alle einem beliebigen Kern des Prozessors zugeordneten verfügbaren Lizenzen in Summe den benötigten Lizenzen entsprechen.

Beispielsweise kann also ein ausführbarer Binärcode, welcher die Bibliotheken B1 und B2 verwendet, auf jedem beliebigen Kern des Prozessors ausgeführt werden. Es kann vorgesehen sein, dass verfügbare Lizenzen pro Prozessorkern gezählt werden. In diesem Fall könnten drei der Prozessorkerne je eine Instanz des Binärcodes ausführen, für den vierten Prozessorkern ist keine Lizenz verfügbar. Alternativ kann es auch vorgesehen sein, dass Lizenzen pro Prozessrechner gezählt werden - unabhängig von den im Rechner vorhandenen Prozessorkernen. Wenn der ausführbare Binärcode anhand eines Modells in einer technischen Rechenumgebung erstellt wird, kann es auch vorgesehen sein, die benötigten Lizenzen anhand der Anzahl verwendeter Bausteine bzw. Elemente einer lizenzpflichtigen Bibliothek zu ermitteln.

Dadurch, dass alle Knoten eines Multiprozessor- bzw. Mehrkernsystems sich die akkumulierten verfügbaren Lizenzen teilen bzw. einen Lizenzpool bilden, ist die Lizenzverwaltung für den Nutzer einfacher und zugleich flexibler.

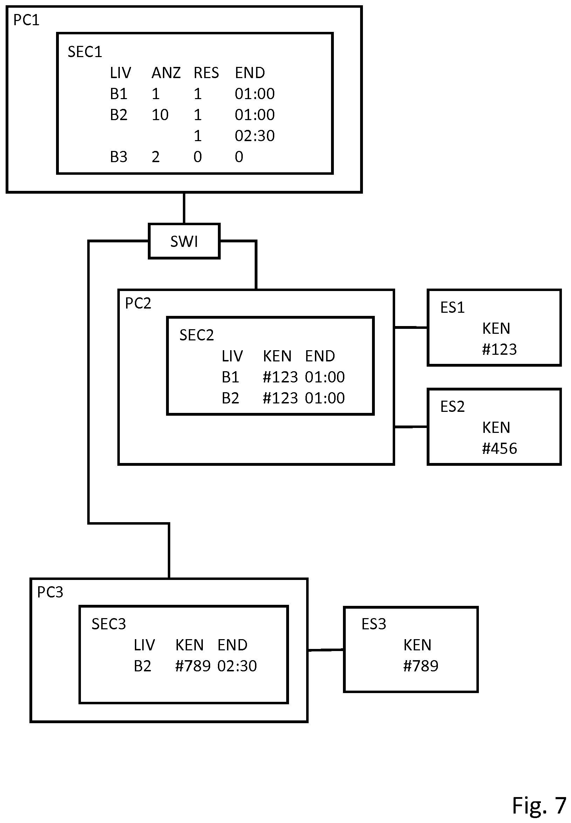

Figur 7 zeigt eine schematische Darstellung eines Servers PC1, der über einen Netzwerkswitch SWI mit zwei Bedienrechnern PC2 und PC3 verbunden ist. Prinzipiell können der Server PC1 und die Bedienrechner PC2 und PC3 weitgehend vergleichbare Hard- und Software aufweisen, sie unterscheiden sich aber zumindest in der Konfiguration des gesicherten Datencontainers SEC.

Der gesicherte Datencontainer SEC1 des Servers PC1 ist dazu eingerichtet, verfügbare Lizenzen LIB für eine vorgegebene Zeit auszuleihen. Es können eine oder mehrere Lizenzen für die jeweilige Bibliothek verfügbar sein, wie dies in dem Feld ANZ angegeben ist. Weiterhin besteht die Möglichkeit Lizenzen zu reservieren, indem eine entsprechende Markierung im Feld RES gesetzt wird. Eine Reservierung ist nur für einen bestimmten Zeitraum gültig, wobei in einem Feld END eine entsprechende Uhrzeit angegeben ist. Prinzipiell kann auch eine verbleibende Laufdauer oder ein Enddatum angegeben bzw. gespeichert werden. In dem gezeigten Beispiel ist eine Lizenz für Bibliothek B1 verfügbar, wobei eine Lizenz bis zur Uhrzeit 01:00 reserviert ist. Aktuell können somit keine Lizenzen für die Bibliothek B1 ausgeliehen werden. Für die Bibliothek B2 sind in dem gezeigten Beispiel 10 Lizenzen prinzipiell verfügbar, wobei eine Lizenz bis zur Uhrzeit 01:00 und eine weitere Lizenz bis zur Uhrzeit 02:30 reserviert sind. Aktuell können somit noch 8 Lizenzen für Bibliothek B2 ausgeliehen werden. In dem gezeigten Beispiel sind weiterhin zwei Lizenzen für die Bibliothek B3 verfügbar, wobei keine Lizenz reserviert ist.

Bedienrechner PC2 ist mit zwei Prozessrechnern ES1 und ES2 verbunden. Der gesicherte Datencontainer SEC2 von PC2 ist so eingerichtet, dass für eine verfügbare Lizenz LIB angegeben ist, welchem Kennzeichen KEN sie zugeordnet ist, und bis zu welcher Uhrzeit END die Lizenz gültig bleibt. Im gezeigten Beispiel ist der Kennung #123 je eine verfügbare Lizenz für die Bibliotheken B1 und B2 zugeordnet. Somit kann auf den Prozessrechner ES1 mit der Kennung #123 jeder ausführbare Binärcode übertragen werden, der die Bibliotheken B1 und/oder B2 nutzt. Wenn ein ausführbarer Binärcode übertragen werden soll, der die Bibliothek B3 nutzt, ist dies zunächst nicht möglich.

Bedienrechner PC3 ist mit einem Prozessrechner ES3 verbunden. Der gesicherte Datencontainer SEC3 von PC3 ist so eingerichtet, dass für eine verfügbare Lizenz LIV angegeben ist, welchem Kennzeichen KEN sie zugeordnet ist, und bis zu welcher Uhrzeit END die Lizenz gültig bleibt. Im gezeigten Beispiel ist der Kennung #789 eine verfügbare Lizenz für die Bibliothek B2 zugeordnet. Da der Prozessrechner ES3 die Kennung #789 besitzt, kann jeder ausführbare Binärcode übertragen werden, der die Bibliothek B2 nutzt. Wenn ein ausführbarer Binärcode übertragen werden soll, der die Bibliothek B1 nutzt, ist dies zunächst nicht möglich.

Soll ein ausführbarer Binärcode auf einen Prozessrechner übertragen werden, dessen Kennung keine verfügbare Lizenz für diese Bibliothek zugeordnet ist, so muss der Bedienrechner versuchen, eine Lizenz von dem Server PC1 auszuleihen. Wenn beispielsweise auf den Prozessrechner ES2 ein ausführbarer Binärcode übertragen werden soll, der die Bibliothek B2 nutzt, fragt Bedienrechner PC2 eine entsprechende Lizenz bei Server PC2 an. Daraufhin reserviert Server PC1 eine verfügbare Lizenz für B2 und setzt eine Uhrzeit für den Ablauf der Lizenz fest. Diese Informationen werden in dem gesicherten Datencontainer SEC1 des Servers PC1 gespeichert und an den Bedienrechner PC2 übertragen. Daraufhin verknüpft Bedienrechner PC2 die verfügbare Lizenz LIV für Bibliothek B2 mit der Kennung #456 von Prozessrechner ES2 und speichert die Informationen in seinem gesicherten Datencontainer SEC2. Bis zum Ablauf der Lizenz bzw. dem Ende der Ausleihdauer kann nun ausführbarer Binärcode, der die Bibliothek B2 nutzt, auf Prozessrechner ES2 übertragen werden.

Eine Client-Server-Architektur, wie sie oben beschrieben wurde, ermöglicht eine flexible Verwendung von Lizenzen in größeren Arbeitsgruppen. Um weiterhin eine zuverlässige Lizenzverwaltung zu gewährleisten, ist es zweckmäßig, eine oder mehrere der folgenden Sicherheitsmaßnahmen zu treffen: So sollten die Uhren der beteiligten Rechner synchronisiert sein, die Übertragung über das Netzwerk sollte verschlüsselt sein, und die einzelnen Rechner müssen sich geeignet untereinander authentifizieren.

## Patentansprüche

1. Verfahren zum Betreiben eines Prozessrechners (ES) wobei der Prozessrechner (ES) zumindest zeitweise mit einem Bedienrechner (PC) verbunden ist, wobei ein Konfigurationsprogramm (KFP) dazu eingerichtet ist, ein eindeutiges Kennzeichen (KEN) des Prozessrechners (ES) zu empfangen, wobei das Konfigurationsprogramm (KFP) einem Authorisierungsprogramm (AUT) das eindeutige Kennzeichen (KEN) sowie Lizenzinformationen zuführt, wobei das Authorisierungsprogramm (AUTH) auf dem Bedienrechner (PC) ausgeführt wird, wobei in einem gesicherten Datencontainer (SEC) des Bedienrechners (PC) eine Zuordnungsliste aus einem oder mehreren eindeutigen Kennzeichnen (KEN) und jeweils einer oder mehreren zugeordneten verfügbaren Lizenzen (LIV) hinterlegt ist, wobei das Authorisierungsprogramm (AUT) zur Feststellung einer Zulässigkeit überprüft, ob die dem eindeutigen Kennzeichen (KEN) des Prozessrechners (ES) zugeordneten verfügbaren Lizenzen (LIV) die gemäß Lizenzinformationen benötigten Lizenzen (LIB) abdecken, **dadurch gekennzeichnet, dass** der Prozessrechner ein Echtzeit-Prozessrechner ist, dass der Bedienrechner (PC) das Konfigurationsprogramm (KFP) ausführt, das ausführbaren Binärcode (APP) auf den Prozessrechner (ES) übertragen kann, wobei dem Binärcode Lizenzinformationen zugeordnet sind, die benötigte Lizenzen (LIB) angeben, wobei die benötigten Lizenzen (LIB) zumindest teilweise nach Maßgabe der für das Erstellen des ausführbaren Binärcodes (APP) verwendeten Bibliotheken (BIB) oder Bausteine bestimmt werden und unabhängig von einem Kennzeichen eines Rechners sind, und dass das Konfigurationsprogramm (KFP) den ausführbaren Binärcode (APP) nur dann auf den Prozessrechner (ES) überträgt, wenn das Authorisierungsprogramm (AUT) vor der Übertragung die Zulässigkeit festgestellt hat.

2. Verfahren nach Anspruch 1, **dadurch gekennzeichnet, dass** der gesicherte Datencontainer (SEC) als Hardware-Dongle ausgeführt ist, der mit dem Bedienrechners (PC) verbunden oder in diesem integriert ist, wobei das Authorisierungsprogramm (AUT) die einem eindeutigen Kennzeichen zugeordneten verfügbaren Lizenzen (LIV) aus dem gesicherten Datencontainer (SEC) ausliest oder von diesem empfängt.

3. Verfahren nach Anspruch 1 oder 2, **dadurch gekennzeichnet, dass** der Binärcode und die zugeordneten Lizenzinformationen in einer Datei enthalten sind, wobei die Lizenzinformationen verschlüsselt sind und vorzugsweise einen Hash-Wert des zugeordneten Binärcodes umfassen.

4. Verfahren nach einem der vorhergehenden Ansprüche, **dadurch gekennzeichnet, dass** der Prozessrechner (ES) mehrere Prozessoren (CPU) aufweist, wobei der Binärcode (APP) dann auf einem beliebigen oder mehreren beliebigen der Prozessoren (CPU) ausgeführt werden kann, wenn alle für einen beliebigen Prozessor (CPU) des Prozessrechners (ES) verfügbaren Lizenzen (LIV) in Summe den Lizenzbedarf abdecken.

5. Verfahren nach einem der vorhergehenden Ansprüche, **dadurch gekennzeichnet, dass** der Binärcode (APP), welcher auf einem Prozessrechner (ES) ausgeführt werden kann, durch Kompilieren und Linken eines Quellcodes (APP.c) erzeugt wird, und dass die Lizenzinformationen zumindest teilweise anhand der verlinkten Bibliotheken (BIB) erzeugt werden.

6. Verfahren nach einem der vorhergehenden Ansprüche, **dadurch gekennzeichnet, dass** der Binärcode (APP), welcher auf einem Prozessrechner (ES) ausgeführt werden kann, zumindest teilweise anhand eines graphischen Modells erzeugt wird, das einen oder mehrere Bausteine umfasst, und dass die Lizenzinformationen zumindest teilweise anhand der für das graphische Modell verwendeten Bausteine erzeugt werden.

7. Verfahren nach einem der vorhergehenden Ansprüche, **dadurch gekennzeichnet, dass** der Bedienrechner (PC2, PC3) mit einem Server (PC1) verbunden ist, wobei der Server (PC1) eine Liste verfügbarer Lizenzen (LIV) ohne zugeordnetes eindeutiges Kennzeichen verwaltet, wobei der Bedienrechner eine oder mehrere der verfügbaren Lizenzen aus der Liste entnimmt, wobei die entnommenen Lizenzen mit dem eindeutigen Kennzeichen eines Prozessrechners (ES1, ES2, ES3) verknüpft werden, und wobei das eindeutige Kennzeichen eines an den Bedienrechner angeschlossenen Prozessrechners (ES1, ES2, ES3) nach erfolgter Verknüpfung von Authorisierungsprogramm (AUT) zur Überprüfung der Zulässigkeit herangezogen wird.

8. Verfahren nach Anspruch 7, **dadurch gekennzeichnet, dass** die entnommenen Lizenzen sowie das verknüpfte eindeutige Kennzeichen in einem gesicherten Datencontainer (SEC) auf dem Bedienrechner (PC) gespeichert werden, wobei der Bedienrechner (PC) eine entnommene Lizenz erst dann wieder aus dem gesicherten Datencontainer (SEC) entfernt und an den Server zurückgibt, wenn der Binärcode von dem Prozessrechner gelöscht wurde oder mit einem anderen Binärcode überschrieben wurde.

9. Bedienrechner (PC) zum Konfigurieren eines Prozessrechners (ES), umfassend einen Prozessor (CPU), eine Schnittstelle (NET) und einen verschlüsselten Datencontainer (SEC), wobei der Prozessor (CPU) dazu eingerichtet ist, ein Verfahren gemäß einem der vorhergehenden Ansprüche auszuführen.

10. Computerprogrammprodukt mit einem computerlesbaren Speichermedium, auf dem Befehle eingebettet sind, die, wenn sie von einem Prozessor ausgeführt werden, bewirken, dass der Prozessor dazu eingerichtet ist, ein Verfahren gemäß einem der Ansprüche 1 bis 8 auszuführen.

## Claims

1. A method for operating a process computer (ES), the process computer (ES) being connected at least intermittently to a workstation (PC), a configuration program (KFP) being set up for receiving a unique label (KEN) of the process computer (ES), the configuration program (KFP) inputting the unique label (KEN) and licensing information to an authorization program (AUT), the authorization program (AUT) being executed on the workstation (PC), an association list of one or more unique labels (KEN) and one or more associated available licenses for each is saved in a secure data container (SEC) of the workstation (PC), the authorization program (AUT) determining permissibility by checking whether the available licenses (LIV) associated with the unique identifier (KEN) of the process computer (ES) cover the licenses (LIB) required according to the licensing information, **characterized in that** the process computer is a real-time process computer, that the workstation (PC) executes the configuration program (KFP) that can transfer the executable binary code (APP) to the process computer (ES), wherein licensing information indicating the required licenses (LIB) is associated with the binary code, wherein the required licenses (LIB) are determined at least in part according to the requirements of the libraries (BIB) or modules used for creating the executable binary code (APP) and are independent of a label of a computer, and that the configuration program (KFP) does not transfer the executable binary code (APP) to the process computer (ES) until the authorization program (AUT) has determined permissibility prior to the transfer.

2. The method according to claim 1, **characterized in that** the secured data container (SEC) is implemented as a hardware dongle connected to or integrated in the workstation (PC), wherein the authorization program (AUT) reads the available licenses (LIV) associated with a unique label from the secured data container (SEC) or receives said licenses from said container.

3. The method according to claim 1 or 2, **characterized in that** the binary code and the associated license information are present in a file, wherein the licensing information is encrypted and preferably comprises a hash value of the associated binary code.

4. The method according to any one of the preceding claims, **characterized in that** the process computer (ES) comprises a plurality of processors (CPU), wherein the binary code (APP) can then be executed on one or more of the processors (CPU) arbitrarily if all of the licenses (LIV) available for an arbitrary processor (CPU) of the process computer (ES) in total cover the licensing requirement.

5. The method according to any one of the preceding claims, **characterized in that** the binary code (APP) for executing on a process computer (ES) is generated by compiling and linking a source code (APP.c), and that the licensing information is generated at least partially using the linked libraries (BIB).

6. The method according to any one of the preceding claims, **characterized in that** the binary code (APP) for executing on a process computer (ES) is generated at least partially using a graphic model comprising one or more modules, and that the licensing information is created at least partially using the modules used for the graphic model.

7. The method according to any one of the preceding claims, **characterized in that** the workstation (PC2, PC3) is connected to a server (PCI), wherein the server (PCI) manages a list of available licenses (LIV) without an associated unique label, wherein the workstation takes one or more of the available licenses from the list, wherein the licenses taken are linked to the unique label of a process computer (ES1, ES2, ES3), and wherein the unique label of a process computer (ES1, ES2, ES3) connected to the workstation is used for checking permissibility after being linked to the authorization program (AUT) .

8. The method according to claim 7, **characterized in that** the licenses taken and the linked unique label are saved in a secure data container (SEC) on the workstation (PC), wherein the workstation (PC) does not remove a taken license from the secured data container (SEC) and return said license to the server until the binary code is deleted from the process computer or is overwritten by a different binary code.

9. A workstation (PC) for configuring a process computer (ES), comprising a processor (CPU), an interface (NET), and an encrypted data container (SEC), wherein the processor (CPU) is set up for performing a method according to any one of the preceding claims.

10. A computer program product having a computer-readable storage medium on which commands are embedded for bringing about the state, when implemented by a processing unit, that the processor is set up for implemented a method according to any one of the claims 1 through 8.

## Revendications

1. Procédé pour exploiter un calculateur de processus (ES), le calculateur de processus (ES) étant relié au moins temporairement à un calculateur de commande (PC), un programme de configuration (KFP) étant configuré pour recevoir un identificateur univoque (KEN) du calculateur de processus (ES), le programme de configuration (KFP) fournissant à un programme d'autorisation (AUT) l'identificateur univoque (KEN) ainsi que des informations de licence, le programme d'autorisation (AUT) étant exécuté sur le calculateur de commande (PC), une liste d'assignation composée d'un ou de plusieurs identificateurs univoques (KEN) et, respectivement, une ou plusieurs licences (LIV) disponibles attribuées étant stockée dans un conteneur de données (SEC) sécurisé du calculateur de commande (PC), le programme d'autorisation (AUT), pour constater une admissibilité, vérifiant si les licences (LIV) disponibles attribuées à l'identificateur univoque (KEN) du calculateur de processus (ES) couvrent les licences (LIB) nécessaires conformément aux informations de licence, **caractérisé en ce que** le calculateur de processus est un calculateur de processus en temps réel, **en ce que** le calculateur de commande (PC) exécute le programme de configuration (KFP), qui peut transférer un code binaire (APP) exécutable sur le calculateur de processus (ES), sachant que des informations de licence, qui indiquent les licences (LIB) requises, sont attribuées au code binaire, sachant que les licences (LIB) requises sont déterminées au moins en partie conformément aux bibliothèques (BIB) ou aux modules utilisés pour générer le code binaire (APP) exécutable et sont indépendantes d'un identificateur d'un calculateur, et **en ce que** le programme de configuration (KFP) ne transfère le code binaire (APP) exécutable au calculateur de processus (ES) que si le programme d'autorisation (AUT) a constaté l'admissibilité avant le transfert.

2. Procédé selon la revendication 1, **caractérisé en ce que** le conteneur de données (SEC) sécurisé est conçu sous la forme d'une clé matérielle qui est reliée avec le calculateur de commande (PC) ou intégrée dans ce dernier, le programme d'autorisation (AUT) lisant les licences (LIV) disponibles attribuées à un identificateur univoque depuis le conteneur de données (SEC) sécurisé ou les recevant depuis ce dernier.

3. Procédé selon la revendication 1 ou 2, **caractérisé en ce que** le code binaire et les informations de licence associées sont contenus dans un fichier, les informations de licence étant cryptées et comprenant de préférence une valeur de hachage du code binaire associé.

4. Procédé selon l'une des revendications précédentes, **caractérisé en ce que** le calculateur de processus (ES) comporte plusieurs processeurs (CPU), le code binaire (APP) pouvant être exécuté sur un quelconque ou plusieurs quelconque des processeurs (CPU) si toutes les licences (LIV) disponibles pour un processeur (CPU) quelconque du calculateur de processus (ES) couvrent au total le besoin en licences.

5. Procédé selon l'une des revendications précédentes, **caractérisé en ce que** le code binaire (APP) qui peut être exécuté sur un calculateur de processus (ES) est généré par compilation et mise en liaison d'un code source (APP.c), et **en ce que** les informations de licence sont générées au moins partiellement à l'aide des bibliothèques (BIB) mises en liaison.

6. Procédé selon l'une des revendications précédentes, **caractérisé en ce que** le code binaire (APP) qui peut être exécuté sur un calculateur de processus (ES) est généré au moins partiellement à partir d'un modèle graphique, lequel comprend un ou plusieurs modules, et **en ce que** les informations de licence sont générées au moins partiellement à l'aide des modules utilisés pour le modèle graphique.

7. Procédé selon l'une des revendications précédentes, **caractérisé en ce que** le calculateur de commande (PC2, PC3) est connecté à un serveur (PC1), le serveur (PC1) gérant une liste de licences (LIV) disponibles sans identificateur univoque attribué, le calculateur de commande prélevant une ou plusieurs des licences disponibles depuis la liste, les licences prélevées étant liées à l'identificateur univoque d'un calculateur de processus (ES1, ES2, ES3), et l'identificateur univoque d'un calculateur de processus (ES1, ES2, ES3) connecté au calculateur de commande est utilisé pour vérifier l'admissibilité après la mise en liaison avec le programme d'autorisation (AUT).

8. Procédé selon la revendication 7, **caractérisé en ce que** les licences prélevées ainsi que l'identificateur univoque lié sont stockés dans un conteneur de données (SEC) sécurisé sur le calculateur de commande (PC), sachant que le calculateur de commande (PC) ne supprime à nouveau une licence prélevée du conteneur de données (SEC) sécurisé et la renvoie au serveur qu'une fois que le code binaire a été supprimé par le calculateur de processus ou écrasé par surécriture par un autre code binaire.

9. Calculateur de commande (PC) pour configurer un calculateur de processus (ES) comprenant un processeur (CPU), une interface (NET) et un conteneur de données (SEC) crypté, le processeur (CPU) étant adapté pour exécuter un procédé selon l'une des revendications précédentes.

10. Produit de programme informatique avec un support de stockage lisible par ordinateur sur lequel sont incorporées des instructions qui, lorsqu'elles sont exécutées par un processeur, font à ce que le processeur soit configuré pour exécuter un procédé selon l'une des revendications 1 à 8.
